# EUROPEAN PATENT APPLICATION

(11) **EP 2 189 400 A1**
(43) Date of publication of application: **26.05.2010**
(21) Application number: 09014001.3
(22) Date of filing: 09.11.2009
(51) Int. Cl.: B65G 49/06, B24B 9/10, B24B 47/22, B28D 7/04

(54) **System for clamping sheets being machined, in particular flat sheets of glass, and associated apparatus for moving and clamping sheets being machined**

(30) Priority: 14.11.2008 IT MI20082019
(71) Applicant: C.M.B. Costruzioni Meccaniche Besana S.p.A., 21033 Cittiglio (VA) (IT)
(72) Inventor: Stanco, Domenico, Leggiuno Varese (IT)
(74) Representative: Jaumann, Paolo

(57) **Abstract**

System (10) for clamping sheets being machined, in particular flat sheets of glass to be machined on a vertical drill (12) or a similar operating machine, comprising a fixed work surface (15) for resting a sheet (L) in a respective machining position (P1) and one or more suction cups (21) which are associated with a vacuum circuit (26, 26a, 26b), wherein, when the sheet (L) is arranged in the machining position (P1), the suction cups (21) are activated by the vacuum circuit (26, 26a, 26b), in particular sucking air through them, so that the suction cups (21) cooperate making direct contact with the surface (L') of the sheet (L), resting on the work surface (15), so to clamp the sheet (L) stably in the machining position (P1), so that it may be machined. The clamping system (10) allows advantageously the clamping, so that they may be machined, both of sheets of "low emission" glass, which typically have a coating on one of their two surfaces, and of varyingly shaped sheets of glass, secure clamping of which would not be possible using simply pressers.

## Description

### Field of the invention

The present invention relates in general to the sector of systems and devices which have the function of clamping sheets and/or semi-finished products during their machining and more particularly concerns a system for clamping flat sheets, in particular made of glass, during machining on an operating machine, as well as to an apparatus and a machine for machining flat sheets of glass which incorporate this clamping system.

### Background of the invention and prior art

For some time machines and apparatus which have been especially developed for machining, on an industrial level, flat sheets of glass have been known and are available on the market.

For example, these machines may consist of vertical drills or similar operating machines by means of which it is possible to perform in a rapid, efficient and automatic manner, as required by industry, boring, milling, grinding and other operations on sheets of glass.

Usually in these machines the sheet of glass, so that it may be correctly machined by the said operating machines, is kept immobile and clamped in a given machining position by a number of clamping pressers which press the sheet of glass against a fixed work surface.

It has been noticed, however, with regard to certain types of glass, and in particular so-called "low emission" glass panes, which usually have a very delicate coating on their surface, how these low-emission glass panes are often prone to damage in the zone of the respective coating, precisely because of the pressure exerted on them by these clamping pressers.

### Brief description of the invention

Therefore a first object which the present invention aims to achieve is that of providing a system for clamping flat sheets, in particular sheets of glass, during machining thereof, which is able to overcome entirely the abovementioned drawbacks, in particular in the case of sheets of glass of the low emission type.

A further, more general, object of the present invention, but nevertheless related to the first object, is that of increasing the efficiency, safety and quality of a wide range of machining operations, for example boring, grinding, milling and other operations which are normally performed by corresponding operating machines, such as drills, boring machines, grinding machines, during machining of the sheets of glass.

The abovementioned objects are achieved by the clamping system according to the invention having the characteristic features cited by the first independent claim and comprising in particular one or more suction cups associated with a vacuum generating circuit, wherein the suction cups, when the sheets of glass is arranged in a given machining position in order to be machined by the operating machine, are activated by the vacuum generating circuit, in particular with air being sucked from and through said suction cups, so that they cooperate making direct contact with the surface of the flat sheet of glass, clamping it stably in the respective machining position and thus allowing the subsequent machining thereof.

In particular, by means of the clamping system according to the invention it is possible to clamp in a stable and secure manner, during machining, not only the "low emission" glass panes mentioned above, but also shaped glass, namely sheets of glass which have an irregular contour and sides which are not cut squarely and which are therefore unsuitable for being kept fixed and stably clamped by means of simple pressers.

Particular embodiments of the invention are also defined by the dependent claims.

### Brief description of the drawings

These and other objects, characteristic features and advantages of the present invention will emerge clearly and fully from the following description of a preferred embodiment thereof, provided by way of a nonlimiting example, with reference to the accompanying drawings in which:
Fig. 1 is a front view of an apparatus, associated with an operating machine, such as a vertical drill, for machining sheets of glass, which apparatus incorporates the clamping system according to the invention;
Fig. 2 is a cross-sectional view along the line II-II of Fig. 1;
Fig. 3 is a side view of the apparatus according to Fig. 1;
Fig. 4 is a view, on a larger scale, of certain details of the apparatus according to Fig. 1;
Fig. 5 is a view, on a larger scale, of a typical suction cup of the clamping system according to Fig. 1, associated with a vacuum generating circuit; and
Fig. 6 is a view, on a larger scale, of the work surface zone of the clamping system according to Fig. 1.

### Description of a preferred embodiment of the invention

In the description of the embodiment below reference will be made mainly to a sheet of glass, as a typical example of a semi-finished product or article being machined, in connection with which the clamping system according to the present invention is preferably used.

It is clear, however, that this clamping system may be conveniently used to clamp stably also other types of semi-finished products and/or articles and/or similar sheet-like panels, without obviously departing from the scope of the invention.

With reference to the drawings, a system, according to the present invention, for clamping flat sheets of glass being machined is denoted generally by 10 and is incorporated in a movement and clamping apparatus 11 which in turn forms part of a more general operating machine, denoted by 12 and only schematically shown in the drawings, for machining sheets of glass.

For example, this operating machine 12 may consist of a vertical drill able to perform boring and/or grinding and/or milling operations on the sheets of glass.

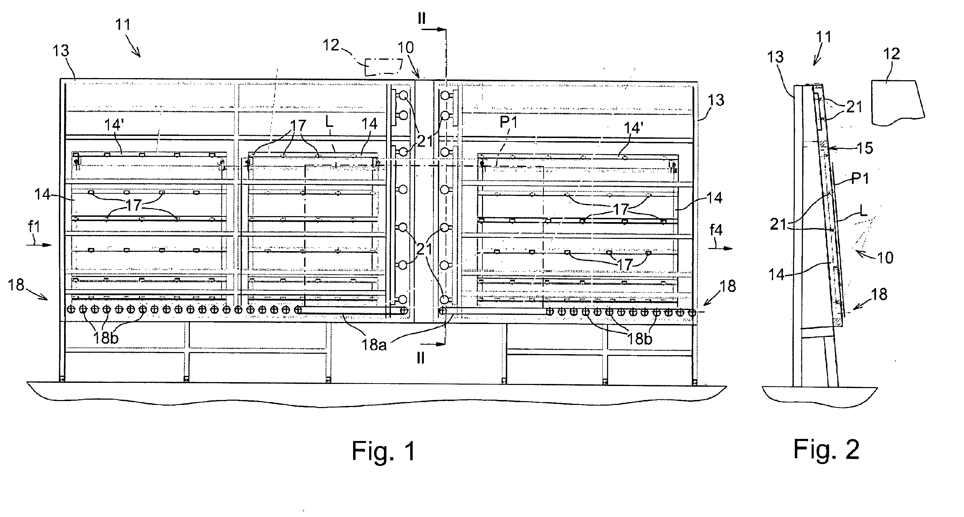

The apparatus 11 has the function, in the machine 12, of allowing the movement, correct positioning and clamping in a machining position of a plurality of sheets of glass - indicated by L and shown by means of dot-dash line in Fig. 1- which must be machined, usually in succession one after another, on the machine 12, or, if the latter is a drill, undergo typical boring operations or the like.

In particular, the apparatus 11 comprises a fixed base structure 13 consisting of a trellis which forms a kind of wall extending both vertically and horizontally.

This fixed structure or trellis 13 is in turn associated with an auxiliary structure or movable surface 14, which may be composed of several sections 14', which is movably mounted on the fixed structure 13 and on which a plurality of idle roller wheels 17 which have the function of coming into contact with and supporting a sheet of glass L to be machined are mounted so as to allow it to be easily moved along the apparatus 11.

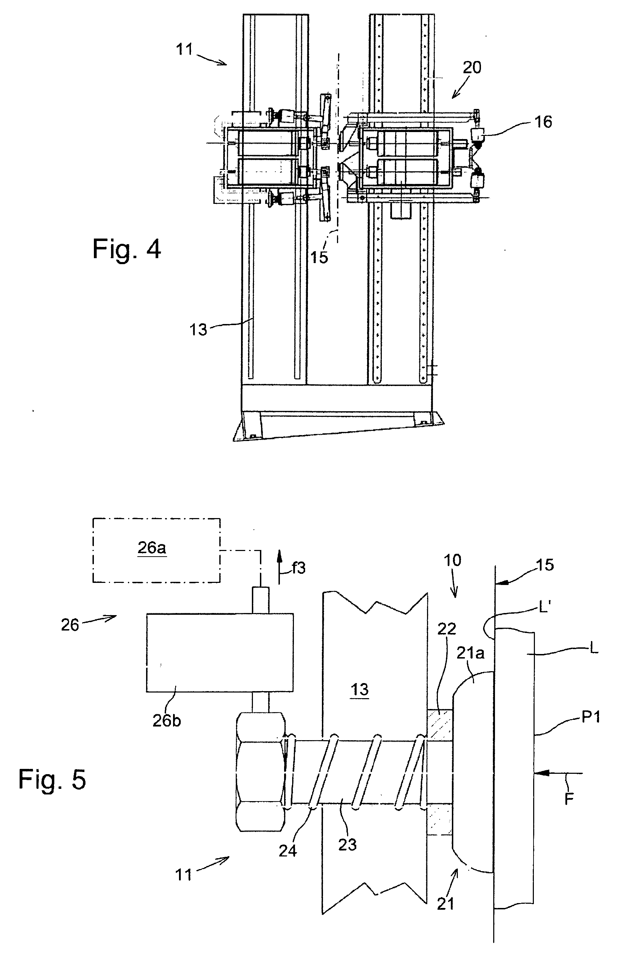

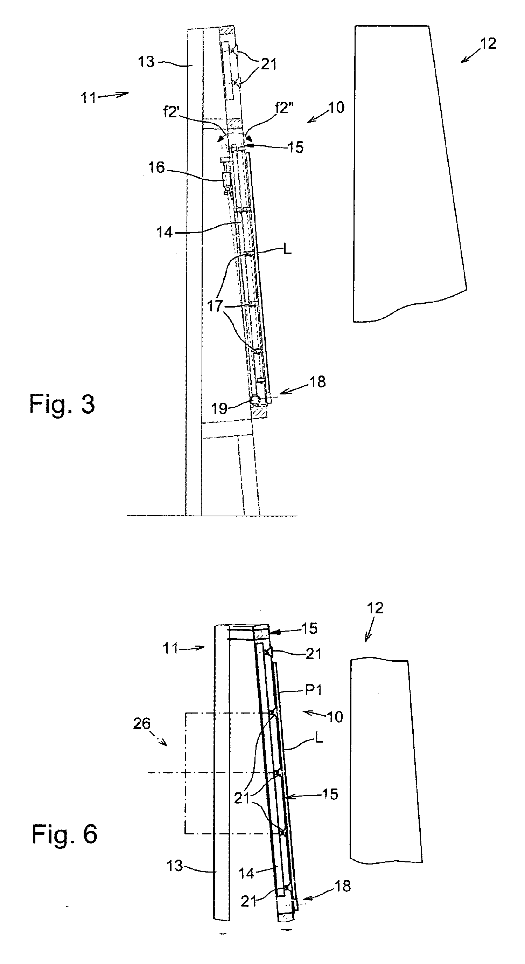

In detail this movable surface 14 is hinged at the bottom on the fixed structure 13 by means of a pivot 19 (Fig. 3) and is connected at the top, via a suitable lever mechanism 20 (Fig. 4), to a pneumatic cylinder 16 and moreover extends along a front side of the fixed structure 13 so as to define together with the idle roller wheels 17, as mentioned mounted on the said movable surface 14, a support surface which is slightly inclined relative to the vertical, for supporting and moving the sheet of glass L during machining thereof on the machine 12, as described more fully below.

The apparatus 11 comprises moreover, at the bottom of the trellis 13, a conveyor 18 which travels horizontally along the entire length of the apparatus 11 and which serves as a support at the bottom thereof for the sheet of glass L and therefore for moving and displacing it through the apparatus 11, relative to the machine 12.

The conveyor 18 in turn comprises, in a central zone in the centre of the apparatus 11, one or more endless belts 18a (Fig. 1) and in the zones on the two sides of the apparatus 11 a plurality of free rollers 18b able to receive and support a bottom edge of the sheet of glass L.

According to a characteristic feature of the present invention, the clamping system 10 also comprises one or more suction cups - denoted by 21 - which are arranged in a machining zone located in the centre of the apparatus 11, where the sheet of glass L is actually machined and which have the function of cooperating with the sheet of glass L so as to clamp it stably in this machining zone so that it may be correctly machined by the operating machine 12.

In detail, according to that shown in Fig. 5 which shows a general view of these suction cups, the suction sups 21 are arranged, relative to the sheet of glass L, resting on the movable surface 14, on the side directed towards the trellis 13.

In this way the suction cups 21 face and therefore cooperate directly making contact with the flat surface L' of the sheet of glass L with which the latter, once arranged in the machining zone, rests against a fixed work surface defined by the trellis 13, as described more fully below.

The suction cups 21 each have a clamping body 21 a which is hollow and generally made of rubber or similar material and able to cooperate with the flat surface L' of the sheet of glass L and are mounted on a support plate 22 which is integral with the fixed trellis 13, by means of a tubular member 23 associated with a spring 24.

Owing to this assembly configuration the suction cups 21 may perform limited movements with respect to the fixed support plate 22 and thus be able to adapt elastically to the operating conditions, in particular during clamping of the sheet of glass L, as described below.

The various suction cups 21 are also associated with and connected in terms of fluid flow by means of a respective tubular member 23 to a circuit 26 for generating a vacuum (also referred to as "vacuum circuit") - shown schematically in dot-dash lines in Figs. 5 and 6 - which comprises a vacuum generating device 26a of the known type and consisting, for example, of a pump which is in turn able to create a vacuum by sucking air from and through the suction cups 21.

In this way, namely as a result of this air sucking action, the vacuum circuit 26 is able to produce, in the zone of the suction cups 21 and in particular inside the respective clamping bodies 21a, a vacuum which is capable of producing a corresponding force of attraction between the said suction cups 21 and the sheet of glass L arranged opposite them so that the sheet is clamped.

Moreover, as shown in Fig. 4, in order to control activation of the suction cups 21 so as to attract and clamp the sheet of glass L, the vacuum circuit 26 comprises furthermore a control valve 26b which is arranged between the suction cups 21 and the vacuum generating device 26a and which is able to open or close the circuit which provides a fluid connection between the suction cups 21 and the device 26a, i.e. allow or prevent the suction of air from and through the suction cups 21.

During use of the clamping system 10, a generic sheet of glass L, intended to be machined by the operating machine 12 and for example drilled by a corresponding drill 12, is initially loaded on the apparatus 11 in a respective mounting or entry zone, resting the sheet of glass L at the bottom on the conveyor 18 and laterally on the idle roller wheels 17 which are mounted on the auxiliary movable structure 14.

Then, as indicated by an arrow f1 (Fig. 1), the sheet of glass L is moved forwards horizontally along the apparatus 11, being both driven by means of the belts 18a of the conveyor 18 and displaced along the idle roller wheels 17 of the movable surface 14 and along the free rollers 18b of the same conveyor belt 18 so as to move the sheet of glass L from the loading zone to the machining zone, at the centre of the apparatus 11, in order to be machined by the drill 12.

When the sheet of glass L is arranged in the machining zone the pneumatic cylinder 16 is activated so as to cause a corresponding rotation of the movable surface 14 about the respective pivoting point 19 on the trellis 13, in the direction indicated by an arrow f2' in Fig. 3, so as to cause a backwards movement of the auxiliary movable surface 14 towards the trellis 13 and the consequent retraction of the roller wheels 17 inside the latter.

In this way the sheet of glass L rests, in a given machining position P1, on a fixed rigid surface - also called work surface 15 - which is defined by the fixed trellis 13 and for example rubber-lined, while the idle roller wheels 17 are separated slightly from the sheet of glass L.

Then the suction cups 21 are activated by the vacuum circuit 26, actuating the respective valve 26b so as to open it and therefore allow the suction of air by means of the device 26a from the zone of the suction cups 21 and through them, as indicated schematically by an arrow f3 in Fig. 5.

As a result, the suction cups 21 cooperate making direct contact with the surface L' (Fig. 5) of the sheet of glass L, resting on the fixed work surface 15, and exert a force of attraction F directed so as to press the sheet of glass L against the work surface 15 and therefore clamp it stably in the working position P1.

At this point the drill 12 may therefore perform correctly the boring operation or another predefined operation on the sheet L, the latter being stably clamped by the suction cups 21 in the respective machining position 21.

Then, once machining of the sheet of glass L by the drill 12 has been completed, the suction cups 21 are deactivated by the vacuum circuit 26, closing the valve 26b and therefore interrupting the suction of air from the zone of the suction cups 21.

As a result, in this way the force of attraction and the thrust exerted by the suction cups 21 on the sheet of glass L against the fixed work surface 15 is eliminated, so that the sheet of glass L is released when in the machining position P1.

Soon after, as indicated by an arrow f2" in Fig. 3, the pneumatic cylinder 19 is actuated so as to bring the movable surface 14 forwards again from the retracted position, which it occupied during machining of the sheet of glass L.

In this way, the movable surface 14 comes into contact again with the sheet of glass L and exerts by means of the respective idle roller wheels 17 on the surface L' of the sheet L, resting on the work surface 15, a thrust directed so as to raise it from this work surface 15 and detach it from the suction cups 21.

Moreover, at the same time, a blast of compressed air is activated via the suction cups 21 by suitable blowing means of the known type, so as to help, during this stage, separation of the suction cups from the surface L' of the sheet of glass L.

Therefore, the sheet of glass L is raised from the work surface 15, being detached from the suction cups 21, and rests again on the idle roller wheels 17 mounted on the movable surface 14.

Then the sheet of glass L, still resting and travelling along the idle roller wheels 17 of the movable surface 14 and along the free rollers 18b of the horizontal conveyor 18, is moved horizontally from the machining zone to another position and in particular to an unloading zone of the apparatus 11, where the sheet of glass L is unloaded from the drill 12 so that it can subsequently undergo any other further machining operations, as indicated by an arrow f4 (Fig. 1).

It is therefore clear, from the above description, that the present invention achieves fully the predefined objects since it provides a clamping system capable of clamping in an efficient, rapid and secure manner flat sheets of glass, while they are being machined on an operating machine such as a vertical drill designed to perform boring and/or grinding and/or milling operations on sheets of glass.

In particular, with the clamping system 10 according to the invention it is possible to clamp stably and without the risk of damaging them, during machining on an operating machine, so-called "low emission" glass sheets which usually have on one of their two opposite surfaces a very delicate surface coating, these sheets of glass being arranged on the apparatus 11 so that the suction cups 21 cooperate making direct contact with the respective surface which does not have this coating so as to clamp them in the machining position P1.

More generally, the system proposed here, as will be evident to any person skilled in the art, is also suitable for being advantageously used to clamp stably sheets, plates and panels of various types, similar to sheets of glass.

Moreover, the same objects and advantages mentioned above may be regarded as being achievable also by an apparatus, such as that 11 described here for moving and clamping flat sheets of glass being machined, which incorporates the clamping system 10 according to the invention and which may be associated with a vast range of operating machines, including a drill, a grinding machine, a chamfering machine or the like.

Without affecting the underlying ideas of the present invention, it is also clear that the system for clamping sheets of glass being machined, described hitherto, may be subject to modifications and improvements, without thereby departing from the scope of the said invention.

## Claims

1. System (10) for clamping sheets being machined in particular flat sheets of glass, comprising a fixed work surface (15) for resting a sheet (L) in a given machining position (P1), **characterized in that** it comprises one or more suction cups (21) which are associated with a vacuum generating circuit (26, 26a, 26b), wherein, when the sheet (L) is arranged in said machining position (P1) in order to be machined, said one or more suction cups (21) are able to be activated by said vacuum circuit (26, 26a, 26b) so that they cooperate making contact with the surface (L') of said sheet (L), resting on said work surface (15), and therefore clamp said sheet (L) in said machining position (P1), and
wherein, after said sheet (L) has been machined in said machining position (P1), said one or more suction cups (21) are able to be deactivated by said vacuum circuit (26, 26a, 26b) so as to release said sheet (L) arranged in said machining position (P1).

2. Clamping system (10) according to Claim 1, wherein said vacuum circuit (26) comprises a device (26a) able to generate a vacuum by sucking air (f3) from and through said one or more suction cups (21) and at least one control valve (26b) arranged between said one or more suction cups (21) and said vacuum-generating device (26a), wherein said control valve (21 b) is able to allow or interrupt the suction of air from the zone of said one or more suction cups (21) so as to activate or deactivate selectively said one or more suction cups (21) in order to clamp or release respectively said sheet (L) in said machining position (P1).

3. Clamping system according to Claim 1 or 2, wherein said one or more suction cups (21) are mounted on a fixed base structure (13, 22) defining said fixed work surface (15) and associated with a movable surface (14) able to receive and support said sheet (L),
wherein said movable surface (14) is able to move (f2') relative to said fixed based structure (13) so as to rest said sheet (L) on said fixed work surface (15) so that it is clamped in said machining position (P1) by said one or more suction cups (21) and subsequently machined,
wherein, at the end of machining of said sheet (L), when said one or more suction cups (21) are deactivated in order to release said sheet (L) located in said machining position (P1), said movable surface (14) is able to move (f2") relative to said fixed base structure (13) so as to raise said sheet (L) from said work surface (15) and exert on the surface (L') of said sheet (L), resting on said work surface (15), a thrust directed so as to detach said sheet (L) from said one or more suction cups (21), and
wherein in particular blowing means are provided for producing a blast of compressed air through said one or more suction cups (21) so as to help them be detached from said sheet (L) at the end of machining in said machining position (P1).

4. Clamping system according to Claim 3, wherein said movable surface (14) supports a plurality of idle roller wheels (17) which are able to cooperate directly making contact with the surface (L') of said sheet (L), resting on said fixed work surface (15) in said machining position (P1) and which are also able to allow the movement of said sheet (L) before and after machining thereof in said machining position (P1).

5. Clamping system according to one of the preceding claims, wherein said sheet is a sheet of glass (L) of the "low emission" type or the like, which has a first surface lined with a coating and a second surface, opposite to the first surface, which is not coated, wherein, in said machining position (P1), said sheet of glass (L) rests on said work surface (15) with said non-coated surface (L') so that also said one or more suction cups (21) cooperate making contact with said non-coated surface (L') so as to clamp the sheet of glass (L) in the machining position (P1).

6. Apparatus (11) for moving and clamping sheets being machined, in particular sheets of glass (L), **characterized in that** it incorporates a clamping system (10) according to Claim 1, for clamping said sheet (L) in said machining position (P1) so that it is machined, said apparatus comprising:
- a fixed base structure (13) which defines said fixed work surface (15) and which supports said one or more suction cups (21); and
- a movable surface (14), in particular pivotably hinged (19) at the bottom on said fixed base structure (13) and able to receive and support said sheet (L),
wherein said movable surface (14) is able to move (f2") relative to said fixed base structure (13) so as to rest said sheet (L) on said fixed work surface (15) so that it is clamped in said machining position (P1) by said on one or more suction cups (21) and subsequently machined, and
wherein, at the end of the machining of said sheet (L), when said one or more suction cups (21) are deactivated so as to release said sheet (L) in said machining position (P1), said movable surface (14) is able to move (f2") relative to said fixed base structure (13) so as to detach said sheet (L) from said work surface (15) and exert on the surface (L') of said sheet (L) resting on said surface (15) a thrust directed so as to separate said sheet (L) from said one or more suction cups (21).

7. Apparatus according to Claim 6, comprising furthermore movement means (17, 18) for allowing the movement of said sheet (L) through said apparatus (11) before and after it has been machined in said machining position (P1).

8. Apparatus according to Claim 7, wherein said movable surface (14) supports a plurality of idle roller wheels (17) which are able to cooperate directly making contact with the surface (L') of said sheet (L), resting on said fixed work surface (15) in said machining position (P1), and which are also able to support said sheet (L) during its movement towards and from the machining zone, in said apparatus (11), where said sheet (L) is machined.

9. Apparatus according to Claim 7 or 8, wherein said movement means comprise a conveyor (18), in particular of the type including a plurality of roller wheels, which travels along said apparatus (11) and is able to receive and support a bottom edge of said sheet (L) so as to move it through said apparatus (11).

10. Machine (12) for machining sheets (L), in particular sheets of glass, **characterized in that** it includes an apparatus (11) for moving and clamping said sheets (L) according to any one of Claims 6 to 9 and in particular consists of a vertical drill or a grinding machine.
